# EUROPÄISCHE PATENTSCHRIFT

(11) **EP 1 196 840 B1**
(45) Veröffentlichungstag und Bekanntmachung des Hinweises auf die Patenterteilung: **05.02.2003**
(21) Anmeldenummer: 00956087.1
(22) Anmeldetag: 19.07.2000
(51) Int. Cl.: G06F 3/14

(54) **VERFAHREN UND TERMINAL ZUR ANZEIGE VON INFORMATIONEN AUF EINEM BILDSCHIRM**
METHOD AND TERMINAL FOR DISPLAYING INFORMATION ON A SCREEN
PROCEDE ET TERMINAL D'AFFICHAGE D'INFORMATIONS SUR UN ECRAN

(30) Priorität: 22.07.1999 DE 19934506
(43) Veröffentlichungstag der Anmeldung: 17.04.2002
(73) Patentinhaber: SIEMENS AKTIENGESELLSCHAFT, 80333 München (DE)
(72) Erfinder: SIEWERTH, Jörg, D-85662 Hohenbrunn (DE); WERNER, Klaus-Jürgen, D-81373 München (DE); ARCOS-RODRIGUEZ, Luis, D-81369 München (DE); HEINOLD, Peter, D-85411 Hohenkammer (DE)
(86) Internationale Anmeldenummer: DE0002360
(87) Internationale Veröffentlichungsnummer: WO01007998

(56) Entgegenhaltungen:
- WO-A-99/00723
- WO-A-99/52032
- US-A- 5 887 133
- BICKMORE T ET AL: "Web page filtering and re-authoring for mobile users" COMPUTER JOURNAL,OXFORD UNIVERSITY PRESS, SURREY,GB, Bd. 42, Nr. 6, 1999, Seiten 534-546, XP002143554 ISSN: 0010-4620

## Beschreibung

Die vorliegende Erfindung bezieht sich auf ein Verfahren zur Anzeige von Informationen auf einem Bildschirm sowie auf ein Terminal für ein Netzwerk.

Die Erfindung bezieht sich insbesondere auf die Darstellung von Informationen aus dem Internet. Bei Internetseiten ist es regelmäßig der Fall, daß neben einer eigentlichen Information/Inhalt auch Werbung insbesondere in Form eines Werbebanners auf bestimmten, dafür vorgesehen Teilflächen (Bestandteilen) einer Internetseite dargestellt wird. Mit anderen Worten, die einem Bildschirm zugeführten Daten sind derart konfiguriert, daß eine Teilfläche der Bildschirmseite zur Anzeige eines Werbebanners konfiguriert ist. Mit anderen Worten, Inhaltsinformationen und Werbung werden gleichzeitig, aber räumlich voneinander getrennt als verschiedene Bestandteile einer Internetseite auf derselben Bildschirmseite zur Darstellung gebracht.

Aus dem Stand der Technik ist es bekannt, durch eine entsprechende Programmierung automatisch Werbebanner zu erfassen und die Anzeige der Internetseite entsprechend dahingehende zu modifizieren, daß nur noch Inhaltsinformationen, aber keine Werbung mehr auf der Bildschirmseite erscheint. Diese Technik wird beispielsweise von der Siemens AG unter dem Schlagwort "Web-Washer" angeboten. Dieser "Web-Washer" ist ein Zusatzprogramm für einen Internet-Browser, das die Navigation im Internet beschleunigen kann. Diese Software läuft auf PC und Server. Dabei wird automatisch Werbung aus Webseiten entfernt, die aufgerufen werden. Pop-Up Fenster, animierte Bilder, und dergleichen werden automatisch gefiltert, so daß Webseiten schneller geladen werden und Bandbreite im Netzwerk gespart werden kann.

Übliche Internetseiten sind auch hinsichtlich einer Anzeige auf einem PC-Monitor, daß heißt auf einem Monitor mit einer Bildschirmdiagonale von beispielsweise 14" oder 15" konfiguriert. Indessen besteht der Trend, beispielsweise Internetseiten auch auf wesentlich kleineren Bildschirmen zur Anzeige zu bringen. Beispielsweise ist der Ansatz bekannt, Internetseiten auf dem Display eines Mobilfunkgeräts wie beispielsweise eines GSM-Telefons, daß somit die Funktion eines Terminals für das Internet-Netzwerk aufweist, zur Anzeige zu bringen. Ein Beispiel für ein GSM-Telefon mit Internetbrowserfunktion ist beispielsweise das Mobiltelefon, das von der Firma Nokia unter Bezeichnung "Communicator" angeboten und vertrieben wird. Bei einem derart kleinen Display, wie es beispielsweise bei Mobilfunkgeräten der Fall ist, wird die Anzeige bei einer räumlich getrennten aber simultanen Darstellungen von Werbebannern und Inhaltsinformation überladen und gegebenenfalls sogar unlesbar.

US 5 887 133 A, WO 99 00723 A und "The Computer Journal", Bd. 42, Nr. 6, 1999, Seiten 534-546 sind weitere Beispiele für den Umgang mit Werbebannern sowie die Umformatierung von Bildschirmseiten.

Ausgehend von diesem Problem hat sich die vorliegende Erfindung zur Aufgabe gestellt, eine Technik zur Anzeige von Bildschirmseiten bereitzustellen, die es ermöglicht, auch auf kleinen Displays Werbebanner und Inhaltsinformation zur Anzeige zu bringen und dabei die Lesbarkeit zu verbessern.

Diese Aufgabe wird erfindungsgemäß durch die Merkmale der unabhängigen Ansprüche gelöst. Die abhängigen Ansprüche bilden den zentralen Gedanken der Erfindung in besonders vorteilhafter Weise weiter.

Zentrale Idee der Erfindung ist es dabei, anstelle der räumlich getrennten simultanen Darstellung eine zeitlich getrennte Darstellung verschiedener Bestandteile einer Bildschirmseite durchzuführen. Somit können beispielsweise Werbung und andere Inhalte einer Internetseite durch zeitliche Trennung auch auf kleinen Bildschirmen dargestellt werden. Bei diesem Beispiel werden also Werbebanner und Informationen nicht zeitgleich nebeneinander auf dem Bildschirm dargestellt, sondern zeitlich hintereinander zur Anzeige gebracht.

Genauer gesagt ist gemäß der vorliegenden Erfindung ein Verfahren zur Anzeige von Informationen auf einem Bildschirm vorgesehen. Informationen, die als ein erster Bestandteil und ein räumlich davon getrennter zweiter Bestandteil zur gleichzeitigen Anzeige auf derselben Bildschirmseite konfiguriert sind, werden zugeführt und der erste Bestandteil wird von dem zweiten Bestandteil abgetrennt. Dann wird der erste Bestandteil und der zweite Bestandteil zeitlich getrennt voneinander auf einem Bildschirm angezeigt.

Die Informationen können aus einem Netzwerk wie beispielsweise dem Internet zugeführt werden.

Der erste Bestandteil kann Werbungs-Information sein.

Ein Wechsel zwischen der Anzeige des ersten bzw. des zweiten Bestandteils kann nach Ablauf einer vorbestimmten Zeitspanne erfolgen.

Ein Wechsel zwischen der Anzeige des ersten bzw. des zweiten Bestandteils kann abhängig von einer Zustandsänderung eines dem Bildschirm zugeordneten Terminals erfolgen. Diese Zustandsänderung kann eine Tastenbetätigung oder eine Lageänderung des Terminals sein.

Nach einem Wechsel der Anzeige abhängig von einer Zustandsänderung kann während einer vorbestimmten Zeitdauer kein weiterer Wechsel möglich sein und erst nach Ablauf der Zeitdauer wird in den vorherigen Zustand gewechselt.

Gemäß der vorliegenden Erfindung ist weiterhin ein Terminal für ein Netzwerk vorgesehen, wobei das Terminal einen Bildschirm und eine Steuereinheit zur Ansteuerung der Anzeige auf dem Bildschirm aufweist. Der Steuereinheit sind Informationen zuführbar, die als ein erster Bestandteil und ein räumlich davon getrennter zweiter Bestandteil zur gleichzeitigen Anzeige auf derselben Bildschirmseite konfiguriert sind. Die Steuereinheit trennt den ersten und den zweiten Bestandteil voneinander und führt sie zeitlich getrennt zur Anzeige dem Bildschirm zu.

Das Terminal kann einen Zeitgeber aufweisen, der durch die Steuereinheit zurückgesetzt werden kann und der ein Zeitbasissignal an die Steuereinheit ausgibt. Die Steuereinheit kann den Bildschirm jeweils nach Ablauf einer vorbestimmten Zeitspanne auf Grundlage des Zeitbasissignals zu einem Wechsel zwischen der Anzeige des ersten bzw. des zweiten Bestandteils ansteuern.

Es kann ein Tastensensor zur Erfassung der Betätigung einer dem Terminal zugeordneten Taste vorgesehen sein. Die Steuereinheit steuert den Bildschirm bei Betätigung der Taste zu einem Wechsel zwischen der Anzeige des ersten bzw. des zweiten Bestandteils an.

Das Terminal kann einen Lagesensor zur Erfassung einer Lageänderung des Terminals aufweisen. Die Steuereinheit kann den Bildschirm bei Erfassung einer Lageänderung des Terminals zu einem Wechsel zwischen der Anzeige des ersten bzw. des zweiten Bestandteils ansteuern.

Weitere Vorteile, Merkmale und Eigenschaften der vorliegenden Erfindung werden aus der folgenden Beschreibung eines Ausführungsbeispiels und bezugnehmend auf die Figuren der begleitenden Zeichnungen näher ersichtlich.
Figur 1 zeigt den Aufbau eines erfindungsgemäßen Terminals,
Figur 2 zeigt den Wechsel zwischen zwei verschiedenen Anzeige-Betriebsarten, und
Figur 3 zeigt ein Ablaufschema gemäß der vorliegenden Erfindung.

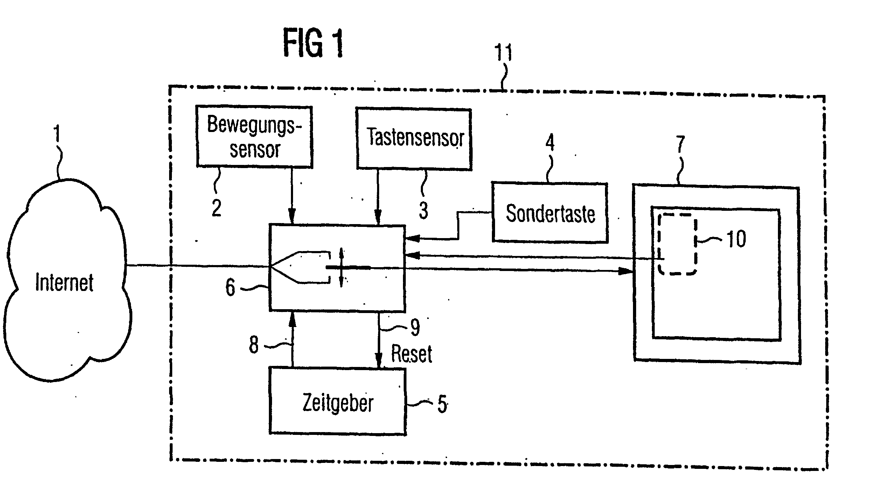

In Figur 1 ist ein Terminal gemäß der vorliegenden Erfindung mit dem Bezugszeichen 11 versehen. Das Terminal weist einen Bildschirm (Monitor) 7 auf. Dieser Bildschirm kann beispielsweise das Display eines Mobilfunkgeräts sein. Die Anzeige auf dem Bildschirm 7 wird durch eine Steuereinheit 6 angesteuert. Der Steuereinheit 6 werden von einer Informationsquelle wie beispielsweise dem Internet 1 her Bildinformationen zugeführt, die derart konfiguriert sind, daß sie normalerweise räumlich getrennt, aber gleichzeitig auf einem Bildschirm angezeigt werden. Die Steuereinheit 6 gemäß der vorliegenden Erfindung trennt verschiedene Bestandteile der zugeführten Information, wie beispielsweise Werbebanner und Inhaltsinformation voneinander. Dies ist symbolisch durch einen Schalter in der Steuereinheit 6 in Figur 1 dargestellt. Verschiedene Bestandteile einer Bildschirmseite, die üblicherweise gemeinsam auf einer Bildschirmseite zur Anzeige gebracht werden, werden also durch die Steuereinheit 6 zeitlich getrennt voneinander dem Bildschirm 7 zugeführt.

Welcher Bestandteil (beispielsweise Werbung oder Inhalt) gerade auf dem Bildschirm 7 zu sehen ist, hängt von einer Anzahl an Bedingungen ab. Die Steuereinheit 6 weist zur Erfassung dieser Bedingungen mehrere Eingänge auf. Mittels dieser Eingänge ist die Steuereinheit 6 mit einem Bewegungssensor 2, einem Tastensensor 3, einer Sondertaste 4 sowie einem Zeitgeber 5 verbunden. Der Zeitgeber 5 gibt ein Zeitbasissignal 8 an die Steuereinheit 6 aus, wobei andererseits der Zeitgeber 5 durch einen Reseteingang von der Steuereinheit 6 her zurückgesetzt 9 werden kann.

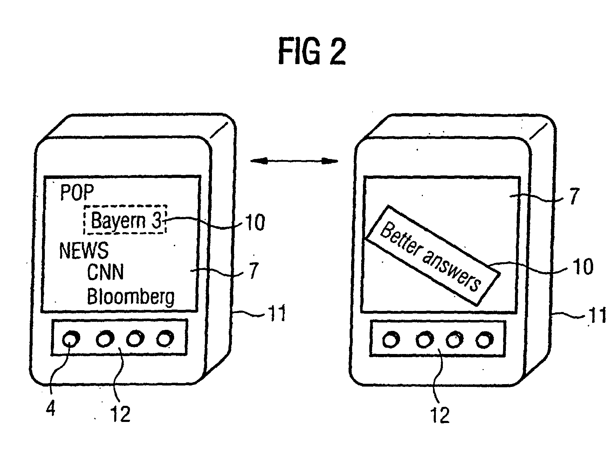

Figur 2 zeigt ein erfindungsgemäßes Terminal 11 in verschiedenen Betriebszuständen. Das Terminal weist nach außen einen Bildschirm (Display) 7 auf. Der Benutzer kann über eine Tastatur 12 mit mehreren Tasten auf das Terminal 11 einwirken. Alternativ oder zusätzlich kann neben den Tasten 12 ein berührungssensitives Feld 10 auf dem Bildschirm 7 vorgesehen sein. In dem Inhaltsanzeigemodus (linkes Bild in Figur 2) kann das berührungssensitive Feld 10 derart gewählt sein, daß durch Berühren dieses Felds 10 automatisch eine Linkadresse, die durch die Anzeige auf dem Feld 10 dargestellt ist, angewählt wird.

In dem Werbe-Anzeigemodus gemäß dem rechten Bild in Figur 2 kann ein Teil der Werbung als berührungssensitives Feld 10 gebildet sein, so daß durch Berührung der Werbeanzeige (Feld 10) weitere Informationen wie beispielsweise die Homepage des Werbebetreibers angewählt werden kann.

Eine der Tasten 12 kann eine Sondertaste 4 sein, durch die zwischen den beiden in Figur 2 gezeigten Anzeigemodi hin- und hergeschaltet werden kann. In Figur 2 ersichtlich kann dadurch, daß nunmehr verschiedene Bestandteile der Bildschirmseite, wie beispielsweise Werbe- und Inhaltsinformation zeitlich voneinander getrennt angezeigt werden, eine klare und übersichtlichere Anzeige erfolgen. Darüber hinaus kann sich der Benutzer immer auf eines von Werbung und Inhalt konzentrieren.

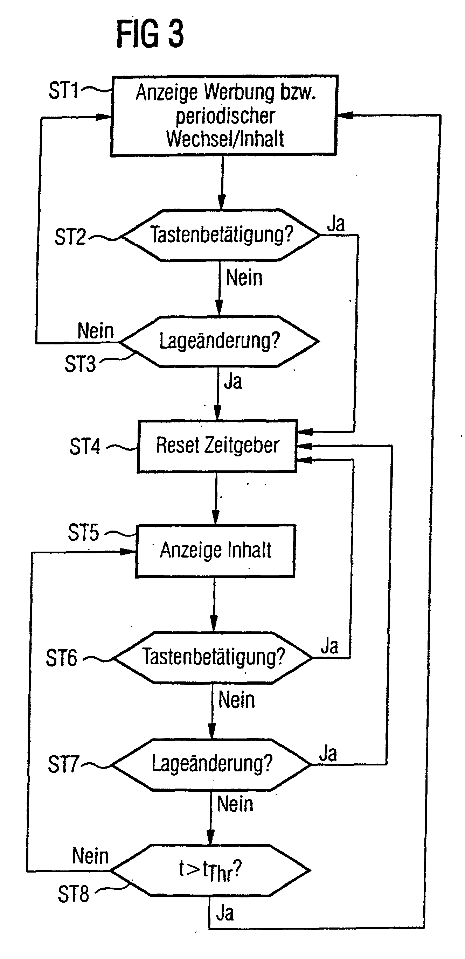

Wie bereits erwähnt, erfolgt die Umschaltung zwischen den verschiedenen Anzeigemodi wie in Figur 2 gezeigt entweder durch direkte Betätigung der Sondertaste 4, oder aber durch eine Erfassung von verschiedenen Zustandsänderungen, wie im folgenden bezugnehmend auf das Ablaufschema von Figur 3 erläutert werden soll.

In einem Ruhezustand des Terminals 11 wird entweder konstant die Werbung angezeigt (Schritt ST1) oder alternativ periodisch, daß heißt nach Ablauf einer vorbestimmten Zeitdauer, die durch den Zeitgeber 5 erfaßt wird, zwischen dem Werbungs- und dem Inhaltsanzeigemodus hin- und hergeschaltet. Dabei wird in einem Schritt ST2 ständig erfaßt, ob eine Tastenbetätigung vorliegt. Dies erfolgt mittels des Tastensensors 3. Der Tastensensor 3 kann dabei neben den eigentlichen Tasten 12 auch die entsprechenden berührungssensitiven Felder 10 auf dem Monitor 7 überwachen.

Für den Fall, daß in Schritt ST2 keine Tastenbetätigung erfaßt wird, wird ermittelt, ob eine Lageänderung (beispielsweise Drehung von der Horizontalen in die Vertikale des Terminals 11) erfolgt. Dies erfolgt mittels des Bewegungs-/Lagesensors 2. Für den Fall, daß weder eine Tastenbetätigung noch eine Lageänderung in den Schritten ST2 bzw. ST3 ermittelt wurde, geht der Ablauf zu Schritt ST1 zurück und die dementsprechende Anzeige erfolgt.

Für den Fall, daß entweder ein Tastenbetätigung oder ein Lageänderung in den Schritten ST2 bzw. ST3 ermittelt wurde, wird in einem Schritt ST4 die Inhaltsinformation, daß heißt der weitere Bestandteil der Bildschirmseiteninformationen zur Anzeige gebracht. Dies entspricht dem linken Bild in Figur 2. Gleichzeitig mit dem Start der Anzeige des Inhalts in Schritt ST4 wird der Zeitgeber 5 in einem Schritt ST5 zurückgesetzt. Dies erfolgt mittels eines Reseteingangs 9 des Zeitgebers 5. In einem Schritt ST6 wird laufend überwacht, ob das Zeitbasissignal 8, das vom Zeitgeber 5 ausgegeben wird, bereits eine Zeitdauer größer als eine vorbestimmte Zeitdauer tₜₕᵣ angibt. Solange diese vorbestimmte Zeitdauer gemäß der Erfassung in Schritt ST6 noch nicht ermittelt wurde, wird weiterhin die Inhaltsinformation angezeigt. Sobald die Zeitdauer überschritten wurde, wird automatisch zu Schritt ST1 zurückgegangen und die Werbung bzw. im periodischen Wechsel Werbung/Inhalt zur Anzeige gebracht.

Gemäß der Erfindung werden also beispielsweise Werbebanner und Inhaltsinformationen nicht zeitgleich nebeneinander auf einem Bildschirm dargestellt, sondern zeitlich hintereinander (getrennt voneinander) angeordnet. Im Normalzustand, daß heißt im ungenutzten Zustand des Terminals werden auf dem beispielsweise sehr kleinen Display des Terminals Werbebanner angezeigt. Durch Berühren einer Taste des Terminals wie beispielsweise eines chock-dials springt die Anzeige automatisch auf den eigentlichen Inhalt der Internetseite um (siehe linkes Bild in Figur 2). Werden die Bedienelemente des Terminals wieder für einige Zeit nicht genutzt, so erscheinen automatisch wieder Werbebanner auf dem Bildschirm. Selbstverständlich kann der Zeitgeber auch zurückgesetzt werden, wenn während der Anzeige der Inhaltsinformation in Schritt ST4 eine erneute Lageänderung oder Tastenbetätigung erfolgte.

Das Umschalten zwischen Werbebanner und anderen Informationsinhalten kann auch durch eine Lageveränderung oder Bewegung des Terminals erfolgen. Eine zusätzliche Bedientaste (Hardware oder berührungssensitives Feld auf dem Bildschirm 7), die nur dann aktiv ist, wenn auf dem Bildschirm ein Werbebanner dargestellt ist, kann auch vorgesehen sein. Durch Drücken der nur zeitweise aktiven Taste können dann weitere Informationen zum Werbebanner oder andere Aktionen ausgelöst werden.

## Patentansprüche

1. Verfahren zur Anzeige von Informationen auf einem Bildschirm,
aufweisend die folgenden Schritte:
- Zuführen von Informationen, die als ein erster Bestandteil und ein räumlich davon getrennter zweiter Bestandteil zur gleichzeitigen Anzeige auf derselben Bildschirmseite konfiguriert sind,
- Trennen (6) des ersten Bestandteils und des zweiten Bestandteils, und
- zeitlich getrennte Anzeige (7) des ersten Bestandteils und zweiten Bestandteils auf einem Bildschirm(7).

2. Verfahren nach Anspruch 1,
**dadurch gekennzeichnet,**
**daß** die Informationen aus einem Netzwerk (1) zugeführt werden.

3. Verfahren nach einem der vorhergehenden Ansprüche,
**dadurch gekennzeichnet,**
**daß** der erste Bestandteil Werbungs-Information ist.

4. Verfahren nach einem der vorhergehenden Ansprüche,
**dadurch gekennzeichnet,**
**daß** ein Wechsel zwischen der Anzeige des ersten bzw. des zweiten Bestandteils jeweils nach Ablauf einer vorbestimmten Zeitspanne erfolgt.

5. Verfahren nach einem der Ansprüche 1 bis 3,
**dadurch gekennzeichnet,**
**daß** ein Wechsel zwischen der Anzeige des ersten bzw. des zweiten Bestandteils abhängig von einer Zustandsänderung eines dem Bildschirm (7) zugeordneten Terminals (11) erfolgt.

6. Verfahren nach Anspruch 5,
**dadurch gekennzeichnet,**
**daß** ein Wechsel zwischen der Anzeige des ersten bzw. des zweiten Bestandteils abhängig von einer Betätigung einer dem Terminal (11) zugeordneten Taste (3), einer Lageänderung des Terminals (11) und/oder der Betätigung eines Touch-Screens (10) erfolgt.

7. Verfahren nach Anspruch 5,
**dadurch gekennzeichnet,**
**daß** nach einem Wechsel der Anzeige abhängig von einer Zustandsänderung während einer vorbestimmten Zeitdauer (5, 8) keine weiterer Wechsel erfolgt.

8. Terminal für ein Netzwerk,
aufweisend einen Bildschirm (7) und eine Steuereinheit (6), die die Anzeige auf dem Bildschirm ansteuert,
wobei der Steuereinheit (6) Informationen, die als ein erster Bestandteil und ein räumlich davon getrennter zweiter Bestandteil zur gleichzeitigen Anzeige auf derselben Bildschirmseite konfiguriert sind, zuführbar sind, wobei die Steuereinheit (6) den ersten und den zweiten Bestandteil voneinander trennt und den Bildschirm (7) zu einer zeitlich getrennten Anzeige des ersten und des zweiten Bestandteils ansteuert.

9. Terminal nach Anspruch 8
**dadurch gekennzeichnet,**
**daß** der erste Bestandteil Werbungs-Information ist.

10. Terminal nach Anspruch 8 oder 9,
**gekennzeichnet durch**
einen Zeitgeber (5), der **durch** die Steuereinheit (6) zurückgesetzt werden kann und der ein Zeitbasissignal (8) an
die Steuereinheit (6) ausgibt,
wobei die Steuereinheit (6) den Bildschirm (11) jeweils nach Ablauf einer vorbestimmten Zeitspanne auf Grundlage des Zeitbasissignals (8) zu einem Wechsel zwischen der Anzeige des ersten bzw. des zweiten Bestandteils ansteuert.

11. Terminal nach einem der Ansprüche 8 bis 10,
**dadurch gekennzeichnet,**
**daß** ein Tastensensor (3) zur Erfassung der Betätigung einer dem Terminal (11) zugeordneten Taste vorgesehen ist,
wobei die Steuereinheit (6) den Bildschirm (11) bei Betätigung der Taste zu einem Wechsel zwischen der Anzeige des ersten bzw. des zweiten Bestandteils ansteuert.

12. Terminal nach einem der Ansprüche 8 bis 10,
**dadurch gekennzeichnet,**
**daß** ein Lagesensor (2) zur Erfassung einer Lageänderung des Terminals (11) vorgesehen ist,
wobei die Steuereinheit (6) den Bildschirm (7) bei Erfassung einer Lageänderung des Terminals (11) zu einem Wechsel zwischen der Anzeige des ersten bzw. des zweiten Bestandteils ansteuert.

13. Terminal nach einem der Ansprüche 8 bis 12,
**dadurch gekennzeichnet,**
**daß** eine Taste zum Umschalten zwischen der Anzeige des ersten Bestandteils und des zweiten Bestandteils und umgekehrt vorgesehen ist.

## Claims

1. Method for displaying information on a screen, having the following steps:
- information configured as a first element and a second element, in a separate space from the latter, for simultaneous display on the same screen page is supplied,
- the first element and the second element are separated (6), and
- the first element and the second element are displayed (7) on a screen (7) at separate times.

2. Method according to Claim 1,
**characterized**
**in that** the information is supplied from a network (1).

3. Method according to one of the preceding claims,
**characterized**
**in that** the first element is advertising information.

4. Method according to one of the preceding claims,
**characterized**
**in that** the display changes between the first element and the second element whenever a predetermined time period has elapsed.

5. Method according to one of Claims 1 to 3,
**characterized**
**in that** the display changes between the first element and the second element depending on a change of state on a terminal (11) associated with the screen (7).

6. Method according to Claim 5,
**characterized**
**in that** the display changes between the first element and the second element depending on actuation of a key (3) associated with the terminal (11), a change in the position of the terminal (11) and/or actuation of a touch screen (10).

7. Method according to Claim 5,
**characterized**
**in that**, after the display has changed depending on a change of state, no further change takes place during a predetermined time period (5, 8).

8. Terminal for a network,
having a screen (7) and a control unit (6) which controls the display on the screen,
where information configured as a first element and a second element, in a separate space from the latter, for simultaneous display on the same screen page can be supplied to the control unit (6), with the control unit (6) separating the first and second elements from one another and prompting the screen (7) to display the first and second elements at separate times.

9. Terminal according to Claim 8,
**characterized**
**in that** the first element is advertising information.

10. Terminal according to Claim 8 or 9,
**characterized by**
a timer (5) which can be reset by the control unit (6) and outputs a time base signal (8) to the control unit (6),
where, whenever a predetermined time period has elapsed, the control unit (6) prompts the screen (11) to change between display of the first element and display of the second element on the basis of the time base signal (8).

11. Terminal according to one of Claims 8 to 10,
**characterized**
**in that** a key sensor (3) is provided for detecting actuation of a key associated with the terminal (11),
where, when the key is actuated, the control unit (6) prompts the screen (11) to change between display of the first element and display of the second element.

12. Terminal according to one of Claims 8 to 10,
**characterized**
**in that** a position sensor (2) is provided for detecting a change in the position of the terminal (11),
where, when a change in the position of the terminal (11) is detected, the control unit (6) prompts the screen (7) to change between display of the first element and display of the second element.

13. Terminal according to one of Claims 8 to 12,
**characterized**
**in that** a key is provided for changing over between display of the first element and display of the second element, and vice versa.

## Revendications

1. Procédé d'affichage d'informations sur un écran, qui présente les étapes suivantes:
- apport d'informations qui sont configurées comme première composante et deuxième composante séparée spatialement de la première, pour affichage simultané sur la même page d'écran,
- séparation (6) de la première composante de la deuxième composante, et
- affichage séparé dans le temps (7) de la première composante et de la deuxième composante sur un écran (7).

2. Procédé selon la revendication 1, **caractérisé en ce que** les informations sont apportées par un réseau (1).

3. Procédé selon l'une des revendications précédentes, **caractérisé en ce que** la première composante est constituée d'informations publicitaires.

4. Procédé selon l'une des revendications précédentes, **caractérisé en ce qu'**un échange entre l'affichage de la première resp. de la deuxième composante s'effectue chaque fois après déroulement d'un laps de temps prédéterminé.

5. Procédé selon l'une des revendications 1 à 3, **caractérisé en ce qu'**un échange entre l'affichage de la première resp. de la deuxième composante s'effectue en fonction d'une modification d'état d'un terminal (11) associé à l'écran (7).

6. Procédé selon la revendication 5, **caractérisé en ce qu'**un échange entre l'affichage de la première resp. de la deuxième composante s'effectue en fonction de l'actionnement d'une touche (3) associée au terminal (11), d'une modification de position du terminal (11) et/ou de l'actionnement d'un écran tactile (10).

7. Procédé selon la revendication 5, **caractérisé en ce qu'**après un échange d'affichage en fonction d'une modification d'état, aucun autre échange n'a lieu pendant une durée prédéterminée (5, 8).

8. Terminal pour un réseau, comprenant un écran (7) et une unité de commande (6) qui commande l'affichage sur l'écran, l'unité de commande (6) pouvant recevoir des informations qui sont configurées comme première composante et comme deuxième composante séparée spatialement de la première, destinées à être affichées simultanément sur la même page d'écran, l'unité de commande (6) séparant la première de la deuxième composante et commandant l'écran (7) pour qu'il affiche de façon séparée dans le temps la première et la deuxième composante.

9. Terminal selon la revendication 8, **caractérisé en ce que** la première composante est constituée d'informations publicitaires.

10. Terminal selon la revendication 8 ou 9, **caractérisé par** une horloge (5) qui peut être réinitialisée par une unité de commande (6) et qui délivre un signal de base de temps (8) à l'unité de commande (6), l'unité de commande (6) commandant à l'écran (11) un échange entre l'affichage de la première resp. de la deuxième composante chaque fois après déroulement d'un laps de temps prédéterminé, sur base du signal de base de temps (8).

11. Terminal selon l'une des revendications 8 à 10, **caractérisé en ce qu'**un capteur de touche (3) pour la détection de l'actionnement d'une touche associée au terminal (11) est prévue, l'unité de commande (6) commandant à l'écran (11) un basculement entre l'affichage de la première resp. de la deuxième composante lors de l'actionnement de la touche.

12. Terminal selon l'une des revendications 8 à 10, **caractérisé en ce qu'**un capteur de position (2) pour la détection d'une modification de position du terminal (11) est prévue, l'unité de commande (6) commandant à l'écran (7) un basculement entre l'affichage de la première resp. de la deuxième composante lors de la détection d'une modification de position du terminal (11).

13. Terminal selon l'une des revendications 8 à 12, **caractérisé en ce qu'**une touche de basculement entre l'affichage de la première composante et de la deuxième composante et inversement est prévue.
